# EUROPÄISCHE PATENTANMELDUNG

(11) **EP 1 559 593 A2**
(43) Veröffentlichungstag der Anmeldung: **03.08.2005**
(21) Anmeldenummer: 04030316.6
(22) Anmeldetag: 21.12.2004
(51) Int. Cl.: B60D 1/46, B60D 1/07

(54) **Anhängesystem zur Verbindung eines Zugfahrzeuges mit einem Anhänger**

(30) Priorität: 27.01.2004 DE 102004004082
(71) Anmelder: Schnabl, Peter, 80935 München (DE)
(72) Erfinder: Schnabl, Paul, 82995 München (DE)
(74) Vertreter: Schaumburg, Thoenes, Thurn, Landskron

(57) **Zusammenfassung**

Bei einem Anhängesystem zur Verbindung eines Zugfahrzeugs, insbesondere Ackerschleppers mit einem Anhänger, umfassend einen Anhängebock (10) mit zwei zueinander parallelen Seitenwangen (12), die mit einem Abstand voneinander in vertikaler Stellung an einem Ende des Zugfahrzeuges anbringbar sind, und mit einer zwischen den unteren Endabschnitten der Seitenwangen (12) angeordneten Brücke (22), die zur Abstützung einer Verbindungseinrichtung (26) dient, ist die Brücke (22) von einer Platte gebildet, die parallel zu und nahe einer oder angrenzend an eine Befestigungsebene (20) des Anhängebockes (10) angeordnet ist, die durch die fahrzeugseitigen Ränder der Seitenwangen (12) verläuft.

## Beschreibung

Die Erfindung betrifft ein Anhängesystem zur Verbindung eines Zugfahrzeuges, insbesondere eines Ackerschleppers mit einem Anhänger, umfassend einen Anhängebock mit zwei zueinander parallelen Seitenwangen, die mit einem Abstand voneinander in vertikaler Stellung an einem Ende des Zugfahrzeuges anbringbar sind, und mit einer zwischen den unteren Endabschnitten der Seitenwangen angeordneten Brücke, die zur Abstützung einer Verbindungseinrichtung dient.

Ein solches Anhängesystem ist beispielsweise aus der EP 1 251 016 A2 bekannt. Bei dieser bekannten Lösung ist die Brücke von einer horizontal gerichteten Platte gebildet, die eine Kugelkopfkupplung trägt und in waagerecht liegenden Aufnahmenuten der Seitenwangen eingeschoben ist. Da die Krafteinleitungsebene der Stützkräfte bei der bekannten Lösung in etwa durch das fahrzeugferne Ende der waagerechten Platte verläuft, sind auch die aufzunehmenden Kräfte in den Aufnahmenuten hier am größten. Da in diesem Bereich das Ende der Aufnahmenut ist, sind die auftretenden Spannungen in diesem Bereich der Aufnahmenut auch extrem hoch. Um also hohe Stützlasten realisieren zu können, ohne dass die Seitenwangen an diesem Punkt versagen, muss entweder sehr hochwertiges Material für ihre Herstellung verwendet oder dieser Bereich mit hohem zusätzlichem Materialaufwand verstärkt werden.

Auch seitliche Zugkräfte werden an derselben sensiblen Position in die Seitenwangen eingeleitet. Der Abstand der Krafteinleitung in die Seitenwangen ist also maximal von der Befestigungsebene entfernt. Das wiederum bedeutet, dass die Verdrillung der belasteten Seitenwangen oder das Kippmoment um den Fußpunkt der Seitenwangen an der Befestigungsebene maximal ist. Der gleiche Umstand gilt an sich auch für eine Obenanhängung, d.h. für eine zwischen den oberen Endbereichen der Seitenwangen angeordnete Verbindungseinrichtung, da auch hier die die Brücke aufnehmenden Nuten zwischen den Seitenwangen maximal von der Befestigungsebene entfernt sind. Hier kann die Belastung jedoch zumindest partiell auf die jeweils gegenüberliegende Seitenwange übertragen werden. Dies geschieht im Bereich des üblicherweise vorhandenen Zapfwellenschutzes, wobei eine Befestigungsstrebe desselben gleichzeitig als Zugstange zur Kraftweiterleitung fungiert. Die Anordnung dieser Befestigungsstrebe ist im oberen Bereich des Anhängebockes ohne weiteres möglich, da hier der nötige Freiraum für die Strebe zur Verfügung steht. Unterhalb der Zapfwelle kann der Freiraum aber nicht für eine solche Zugstrebe genutzt werden, da er entweder von den Kupplungsteilen selbst oder für Kupplungsfunktionen freigehalten werden muss. Gerade bei der Untenanhängung, wo besonders hohe Kräfte eingeleitet werden sollen, müssen die Seitenkräfte komplett von einer Seitenwange und auch noch zusätzlich an einer besonders empfindlichen Stelle derselben aufgenommen werden.

Der Erfindung liegt die Aufgabe zugrunde, ein Anhängesystem der eingangs genannten Art so auszubilden, dass die Belastbarkeit des Anhängebockes erhöht und der Schwenkwinkel der Anhängerdeichsel gegenüber dem Zugfahrzeug vergrößert werden kann.

Diese Aufgabe wird erfindungsgemäß dadurch gelöst, dass die Brücke von einer Platte gebildet ist, die parallel zu und nahe einer oder angrenzend an eine Befestigungsebene des Anhängebockes angeordnet ist, die durch die fahrzeugseitigen Ränder der Seitenwangen verläuft.

Der wesentliche Vorteil der Erfindung liegt bezüglich der aufzunehmenden Seitenkräfte darin, dass der Hebelweg, der ― als lineare Größe ― ebenso wie die Kraft selbst, den Wert der Verdrillung bestimmt, sehr kurz gehalten ist. Das bedeutet, dass zwar auch bei der erfindungsgemäßen Lösung die ganze Kraft von einer Seitenwange aufgenommen werden muss, die Verdrillung der Seitenwange aber keinen bedeutenden Schwachpunkt darstellt. Da die auf die Platte einwirkenden Seitenkräfte von der gesamten Breitseite der Platte auf die jeweilige Seitenwange übertragen werden, tritt auch keine Kerbwirkung an der Seitenwange auf, wie dies bei der Lösung nach der EP 1 251 016 der Fall ist.

Die erfindungsgemäße Lösung bietet einen weiteren wesentlichen Vorteil gegenüber der Ausführung gemäß der EP 1 251 016. Bei der dort beschriebenen Lösung können als Untenanhängung lediglich die Kupplungssysteme "Kugelkopfkupplung", "Piton-Fix" und in eingeschränktem Maße der "Hitch-Haken" sinnvoll eingesetzt werden. Die Verwendung einer automatischen Anhängekupplung, wie sie im oberen Teil des Anhängebockes eingesetzt wird, würde eine völlig neue Lagerung voraussetzen. Die Verwendung derselben "Anhängekupplung" für die Obenanhängung oder Untenanhängung wäre dann nicht mehr möglich.

Die erfindungsgemäße Lösung bietet ferner die Möglichkeit, zumindest im Bereich der Brücke die senkrecht zur Befestigungsebene gemessene Abmessung der Seitenwangen so zu wählen, dass der Abstand der fahrzeugfernen Ränder der Seitenwangen von der Platte geringer ist als der Abstand des Kupplungsgliedes der Verbindungseinrichtung von der Platte. Dadurch vergrößert sich der mögliche Schwenkwinkel der Anhängerdeichsel um eine vertikale Achse relativ zum Zugfahrzeug, bevor die Deichsel an den Seitenwangen des Anhängebockes anschlagen kann. Ferner kann die Verbindungseinrichtung dadurch bei Erhaltung eines großen Schwenkwinkels dicht an der die Brücke bildenden Platte angeordnet werden, wodurch nicht nur höhere Stützlasten aufgenommen werden können, sondern die Kupplung auch im Anhängebock verbleiben kann, wenn die Zapfwelle, wie beispielsweise bei Ackerschleppern häufig erforderlich, mit Dreipunkt-Anhängegeräten gekoppelt wird. In diesem Fall muss ein gewisser Schwenkraum für die mit der Zapfwelle gekoppelte Antriebswelle des Anhängegerätes zur Verfügung stehen, der nicht durch den Kupplungskopf behindert werden darf. Bei den bisher bekannten Lösungen wäre es nicht möglich, eine untere Anhängekupplung im Anhängebock zu belassen.

Vorzugsweise ist die Brücke in an sich bekannter Weise lösbar mit den Seitenwangen verbunden, so dass durch Austauschen der die Verbindungseinrichtung tragenden Brücke verschiedene Verbindungseinrichtungen auf bequeme Weise mit dem Anhängebock verbunden werden können. Um trotz der lösbaren Verbindung der Brücke mit den Seitenwangen einen sicheren Halt der Brücke an den Seitenwangen zu gewährleisten, ist es zweckmäßig, wenn die die Brücke bildende Platte in Nuten eingreift, die an den einander zugekehrten Innenflächen der Seitenwangen ausgebildet sind. Um das Auswechseln der Brücke zu erleichtern, ist es zweckmäßig, wenn die Nuten an mindestens einem Längsende der Seitenwangen offen sind und die Brücke über Steckbolzen an den Seitenwangen arretierbar ist, die Bohrungen in den Seitenwangen durchsetzen.

Als Verbindungseinrichtung selbst kann eine der gängigen Kupplungen gewählt werden. So kann die Verbindungseinrichtung als Anhängekupplung ausgebildet sein, die um eine zur Befestigungsebene senkrechte Achse drehbar an der Brücke gelagert sein kann. Wird als Verbindungseinrichtung eine Hitch-Haken-Kupplung, eine Kugelkopfkupplung oder eine Piton-Fix-Kupplung gewählt, so ist die die Brücke bildende Platte zweckmäßigerweise mit einem senkrecht zu ihr gerichteten Trägerabschnitt für die jeweilige Verbindungseinrichtung verbunden, wobei das jeweilige Kupplungselement, also der Hitch-Haken, die Kugelkopfkupplung oder der Piton-Fix auf dem Trägerabschnitt angeordnet sind. Die die Brücke bildende Platte kann einstückig mit dem Trägerabschnitt ausgebildet sein.

Bei entsprechender vertikaler Ausdehnung des Anhängebockes kann auch zwischen den oberen Endabschnitten der Seitenwangen eine weitere Brücke angeordnet sein, die eine Anhängekupplung trägt. Diese weitere Brücke kann ebenso wie die untere Brücke in an sich bekannter Weise als Fahrstuhllager ausgebildet sein, um die Anhängekupplung in der Höhe verstellen zu können.

Der wesentliche Gedanke der erfindungsgemäßen Lösung, nämlich die Anordnung der Brücke nahe an der Befestigungsebene des Anhängebockes lässt sich auch für den Fall nutzen, dass die Verbindung zwischen Zugfahrzeug und Anhänger über ein Zugpendel erfolgt. In diesem Falle dient die Brücke lediglich als Abstützung für das Zugpendel.

Weitere vorteilhafte Ausführungen der Erfindung sind in den Unteransprüchen beschrieben.

Die folgende Beschreibung erläutert in Verbindung mit den beigefügten Zeichnungen die Erfindung anhand eines Ausführungsbeispieles. Es zeigen:
- Fig. 1: eine perspektivische Darstellung eines Anhängesystems gemäß einer ersten Ausführungsform der Erfindung mit einer Bolzenkupplung,
- Fig. 2: eine Seitenansicht des in Figur 1 dargestellten Anhängesystems,
- Fig. 3: eine der Figur 1 entsprechende Darstellung eines Anhängesystems mit einer Kugelkopfkupplung,
- Fig. 4: eine der Figur 1 entsprechende Darstellung einer dritten Ausführungsform der Erfindung,
- Fig. 5: eine der Figur 2 entsprechende Darstellung einer vierten Ausführungsform der Erfindung, bei welcher die automatische Bolzenkupplung durch eine manuelle Bolzenkupplung ersetzt ist,
- Fig. 6: eine der Figur 1 entsprechende Darstellung einer fünften Ausführungsform der Erfindung,
- Fig. 7: einen Schnitt entlang der Linie VII - VII in Figur 6 und
- Fig. 8: einen Schnitt entlang der Linie VIII - VIII in Figur 7.

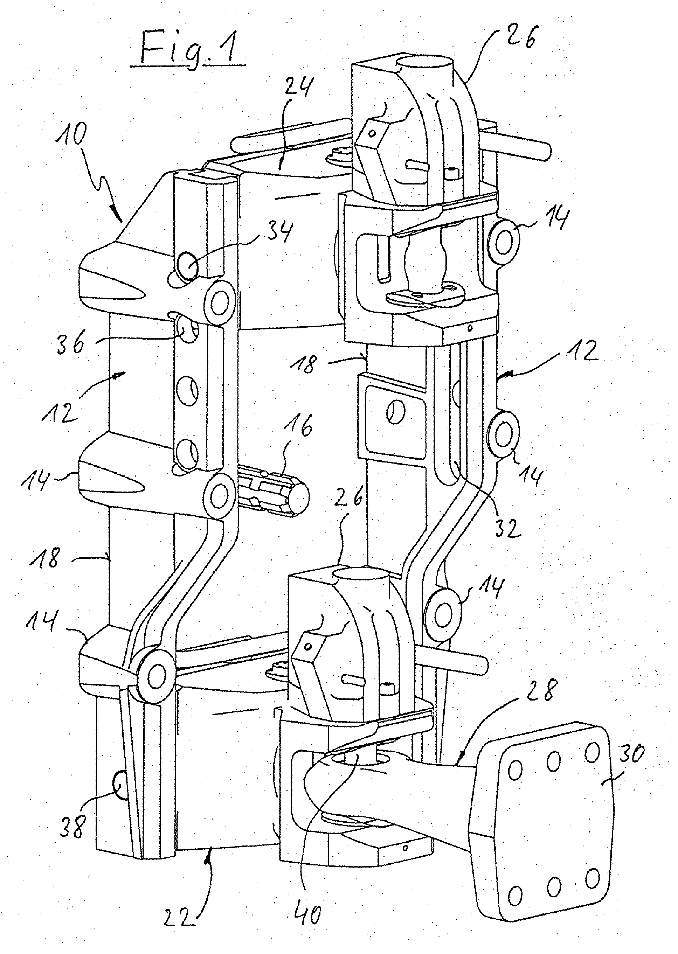

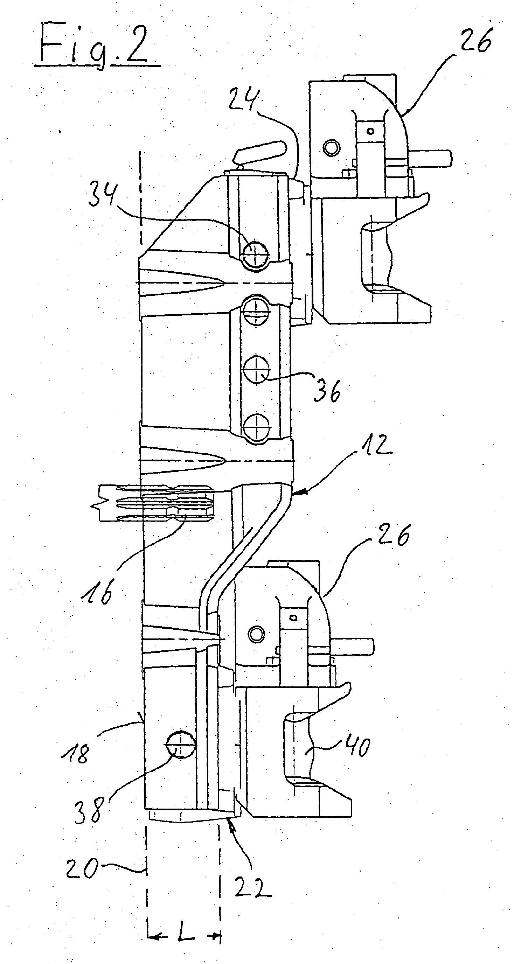

Das Anhängesystem gemäß Figur 1 umfasst einen allgemein mit 10 bezeichneten Anhängebock, der zur Befestigung an dem Heck eines Zugfahrzeuges bestimmt ist. Der Anhängebock 10 umfasst zwei zueinander parallele längliche Seitenwangen 12 mit Führungen 14 für nicht dargestellte Befestigungsbolzen, mit denen die Seitenwangen 12 an dem Zugfahrzeug befestigt werden können. Die dem lediglich durch eine Zapfwelle 16 angedeuteten Zugfahrzeug zugewandten Ränder 18 der Seitenwangen 12 liegen zumindest annähernd in einer gemeinsamen Ebene 20, die in der Figur 2 gestrichelt angedeutet ist und im weiteren als Befestigungsebene bezeichnet wird.

In ihrem unteren und oberen Endbereich sind die vertikalen Seitenwangen 12 jeweils durch eine plattenförmige Brücke 22 bzw. 24 verbunden, die in dem dargestellten Ausführungsbeispiel jeweils eine herkömmliche automatische Bolzenkupplung 26 (Anhängekupplung) tragen. Die beiden Bolzenkupplungen sind dabei in an sich bekannter Weise jeweils um eine zur Befestigungsebene 20 gerichtete Achse drehbar an der Brücke 24 bzw. 22 gelagert. An der unteren Bolzenkupplung 26 ist eine Zugöse 28 eingekuppelt, die über einen Flansch 30 mit einer nicht dargestellten Deichsel eines Anhängers verbindbar ist.

Die obere Brücke 24 ist als sogenanntes Fahrstuhllager ausgeführt und greift in Führungsnuten 32 ein, die an den einander zugekehrten Innenflächen der Seitenwangen 12 ausgebildet sind, so dass das Fahrstuhllager oder die obere Brücke 24 höhenverstellbar zwischen den Seitenwangen 12 gehalten ist. In den verschiedenen Höhenstellungen kann die Brücke 24 über Bolzen 34 arretiert werden, die durch Bohrungen 36 in den Seitenwangen 12 gesteckt werden.

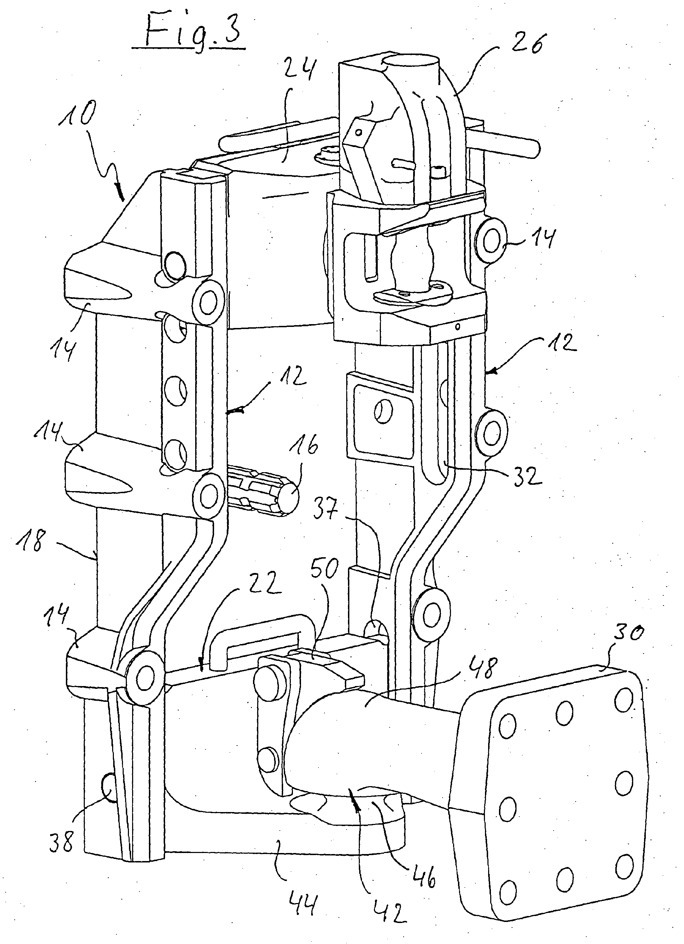

Die untere Brücke 22 ist unmittelbar angrenzend an die Befestigungsebene 20 zwischen den Seitenwangen 12 gehalten. Sie greift dabei ebenso wie die obere Brücke in in der Figur 3 erkennbare Nuten 37 an den Innenseiten der Seitenwangen 12 ein und ist über Steckbolzen 38 an den Seitenwangen 12 arretiert. Die senkrecht zur Befestigungsebene gemessene Abmessung L der Seitenwangen im Bereich der unteren Brücke 22 ist praktisch auf das entsprechende Maß der plattenförmigen Brücke 22 verringert, so dass die Anhängekupplung 26 völlig frei liegt und eine Schwenkbewegung der Zugöse 28 um die Längsachse des Kupplungsbolzens 40 der Anhängekupplung 26 durch die Seitenwangen 12 des Anhängebockes 10 nicht behindert wird. Ferner kann sich die Anhängekupplung 26 ungehindert um eine zur Befestigungsebene 20 senkrechte Längsachse drehen.

Bei der in Figur 3 dargestellten Ausführungsform ist die untere Brücke 22 mit der Bolzenkupplung 26 durch eine abgewandelte Brücke 22 für eine Kugelkopfkupplung 42 ersetzt. Die Brücke 22 hat bei dieser Ausführungsform einen senkrecht zur Befestigungsebene 20 abstehenden Trägerabschnitt 44, auf dem die Kupplungskugel 46 der Kugelkopfkupplung 42 angeordnet ist. Das deichselseitige Kupplungsteil übergreift mit einer Zugschale 48 die Kupplungskugel 46 und wird durch einen an der Brücke 22 gehaltenen Sperrhaken 50 in der gekuppelten Stellung gesichert.

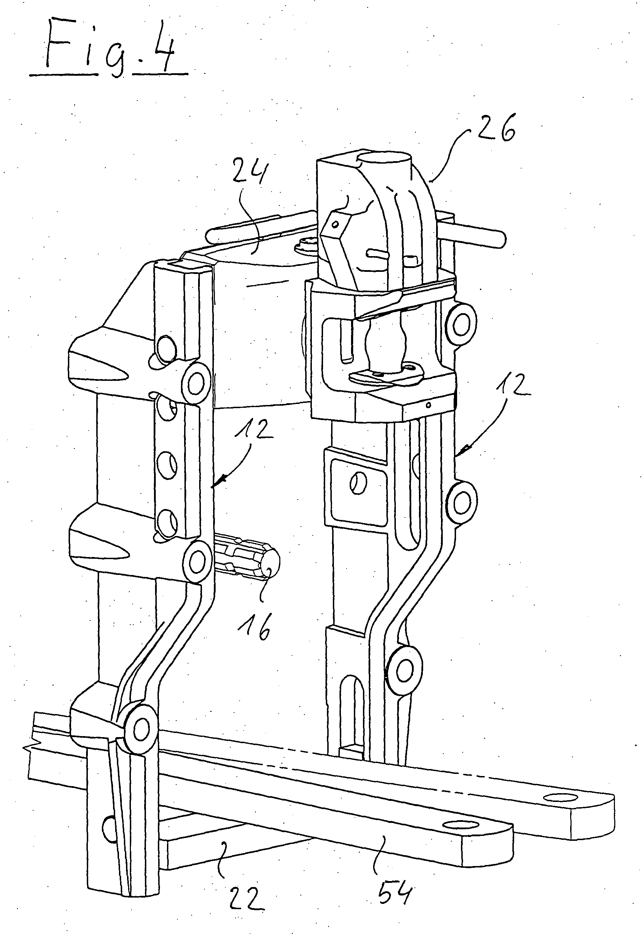

Figur 4 zeigt eine Variante, bei der die Verbindung zwischen dem Zugfahrzeug und einem Anhänger über ein sogenanntes Zugpendel 54 erfolgt. Das Zugpendel 54 wird dabei durch die gegenüber den vorherigen Ausführungsbeispielen niedriger ausgebildete Brücke 22 abgestützt.

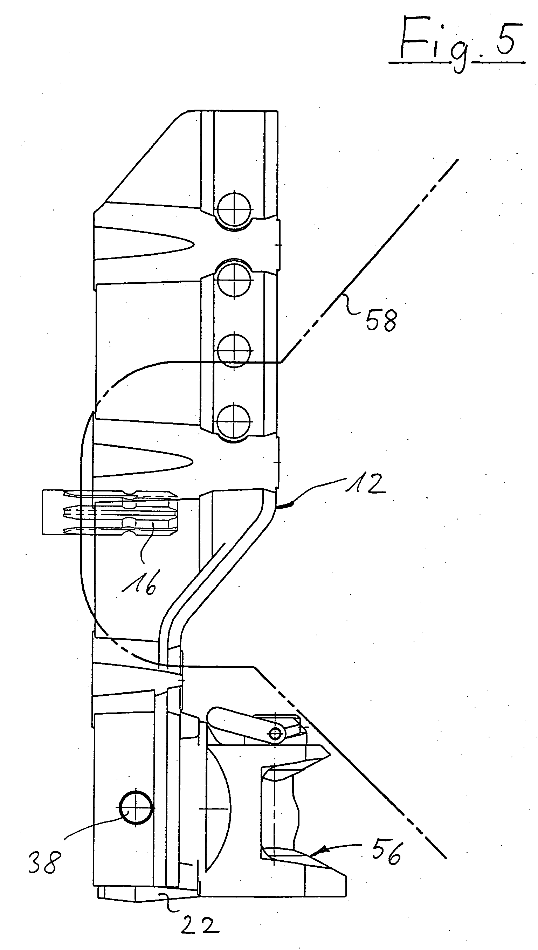

Figur 5 zeigt eine abgewandelte Ausführungsform des in den Figuren 1 und 2 dargestellten Anhängesystems. Anstelle der automatischen Bolzenkupplung 26 ist eine manuelle Bolzenkupplung 56 an der unteren Brücke 22 angeordnet. Mit der strichpunktierten Linie 58 ist der Zapfwellenfreiraum angedeutet, der benötigt wird, wenn ein an dem Zugfahrzeug über eine Dreipunktanhängung angekoppeltes, über die Zapfwelle antreibbares Gerät verschwenkt wird. Wie man in Figur 5 erkennt, liegt die manuelle Anhängekupplung 56 außerhalb des durch die Linie 58 bezeichneten Zapfwellenfreiraumes, so dass sie an dem Anhängebock verbleiben kann, wenn das Zugfahrzeug mit dem Dreipunkt-Anhängegerät verbunden wird. Dies war bei den bisherigen Anhängesystemen nicht möglich.

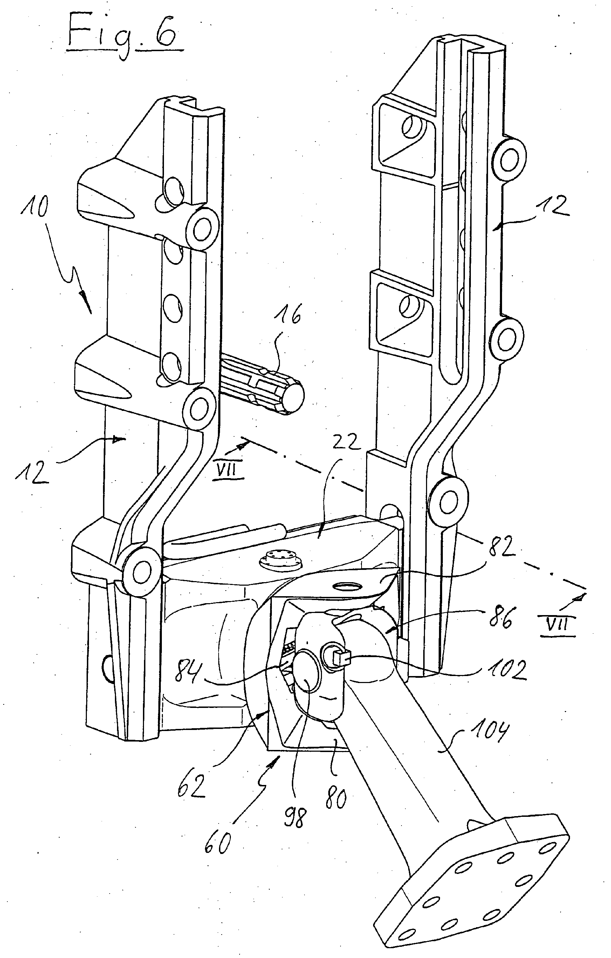

Die Figuren 6 bis 8 zeigen eine weitere Ausführungsform der Erfindung, die sich durch eine besonders kompakte Ausführung und einen großen Schwenkwinkel der Deichsel relativ zum Zugfahrzeug auszeichnet und die zur Aufnahme hoher Stützkräfte geeignet ist.

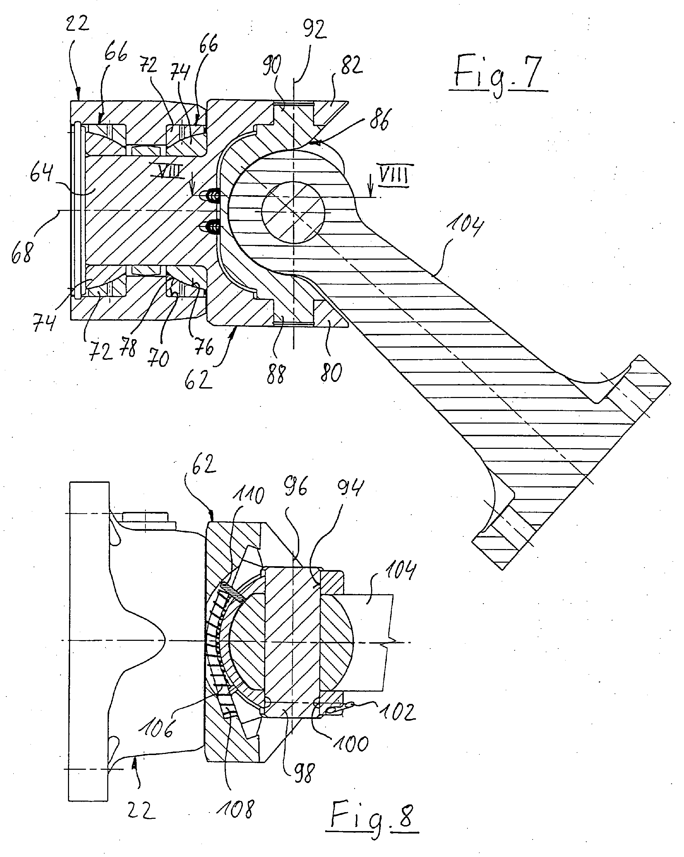

Die Verbindungseinrichtung umfasst einen allgemein mit 60 bezeichneten Kupplungskopf mit einem äußeren Kupplungsteil 62, das gemäß Figur 7 einstückig mit einem Lagerzapfen 64 ausgebildet ist und in der als Lagergehäuse dienenden Brücke 22 mittels zweier Lager 66 in der Brücke 22 um eine zur Fahrzeuglängsrichtung parallele erste Schwenkachse 68 schwenkbar gelagert ist. Die Lager 66 umfassen jeweils einen in einer Lagerbohrung 70 fest angeordneten Außenring 72 und einen auf dem Lagerzapfen 64 angeordneten Innenring 74. Die Lager 66 sind als Schräggelenklager ausgebildet, bei dem die aneinander anliegenden Gleitflächen 76, 78 von Außenring 72 bzw. Innenring 74 sphärische Ringflächen sind.

Das blockförmige äußere Kupplungsteil 62 hat zwischen einem unteren Flansch 80 und einem oberen Flansch 82 eine Aufnahme 84 für ein inneres Kupplungsteil 86, das mit einem unteren Lagerzapfen 88 und einem oberen Lagerzapfen 90 zwischen dem unteren Flansch 80 und dem oberen Flansch 82 des äußeren Kupplungsteiles 62 um eine zur ersten Schwenkachse 68 senkrechte zweite Schwenkachse 92 schwenkbar gelagert ist, wie dies Figur 7 zeigt. Das innere Kupplungsteil 86 hat eine Bohrung 94 mit zur zweiten Schwenkachse 92 senkrechter Bohrungsachse 96 zur Führung eines manuell einsteckbaren Kupplungsbolzens 98. Der Kupplungsbolzen hat nahe seinem einen Längsende eine Ringnut 100, in die ein Sicherungsstift 102 eingreifen kann, um den Kupplungsbolzen in dem inneren Kupplungsteil 86 festzulegen. Wie man in den Figuren 6 und 8 erkennt, ist der Kupplungsbolzen 98 in seiner Länge so bemessen, dass seine axialen Endflächen zumindest annähernd mit der Außenumfangsfläche des inneren Kupplungsteils 86 fluchten.

Wie insbesondere die Figur 7 erkennen lässt, ist die Aufnahme 84 in ihrer Kontur an die Außenkontur des inneren Kupplungsteiles 86 angepasst, so dass sich eine sehr kompakte Anordnung ergibt und der Kupplungsbolzen 98 sehr nah an die Brücke 22 herangerückt ist. Wie die Figur 6 zeigt, ist die Zugöse 104 für eine vertikale Montage an einer Deichsel eines Anhängers bestimmt, so dass in der Normalstellung des Kupplungskopfes 60 der Kupplungsbolzen 98 horizontal gerichtet ist. Die Schwenkbarkeit der Zugöse 104 um den horizontalen Kupplungsbolzen 98, d. h. die Schwenkbarkeit in einer vertikalen Ebene ermöglicht problemlos einen großen Schwenkwinkel der Zugöse 104 um die horizontale Bolzenachse 96, wie dies Figur 7 erkennen lässt. Der völlig freiliegende Kupplungskopf 60 ermöglicht in Verbindung mit dem schwenkbaren inneren Kupplungsteil 86 einen großen Schwenkwinkel der Zugöse 104 und der mit ihr verbundenen Deichsel um die zweite Schwenkachse 92. Die kompakte Ausbildung der gesamten Verbindungseinrichtung erlaubt in Verbindung mit den Schräggelenklagern 66 die Aufnahme hoher Stützlasten.

Das innere Kupplungsteil 86 wird durch zwei Federn 106 in seine in der Figur 8 dargestellte Mittellage bezüglich der zweiten Schwenkachse 92 vorgespannt. Die Federn 106 sind jeweils in einer innerhalb der Aufnahme 84 ausgebildeten Nut 108 angeordnet und werden durch einen mit dem inneren Kupplungsteil 86 verbundenen Stift 110 beim Verschwenken des inneren Kupplungsteils 86 gegenüber dem äußeren Kupplungsteil 62 zusammengepresst, so dass sie das innere Kupplungsteil 86 in seine Mittelstellung zurückdrehen, wenn keine äußere Kraft mehr auf das innere Kupplungsteil 86 wirkt.

Auch bei der Ausführungsform gemäß den Figuren 6 bis 8 ist der Kupplungskopf 60 so gestaltet, dass er außerhalb des durch die Linie 58 in Figur 5 gekennzeichneten Zapfwellenfreiraums liegt.

## Patentansprüche

1. Anhängesystem zur Verbindung eines Zugfahrzeugs, insbesondere Ackerschleppers mit einem Anhänger, umfassend einen Anhängebock (10) mit zwei zueinander parallelen Seitenwangen (12), die mit einem Abstand voneinander in vertikaler Stellung an einem Ende des Zugfahrzeuges anbringbar sind, und mit einer zwischen den unteren Endabschnitten der Seitenwangen (12) angeordneten Brücke (22), die zur Abstützung einer Verbindungseinrichtung (26, 42, 54) dient, **dadurch gekennzeichnet, dass** die Brücke (22) von einer Platte gebildet ist, die parallel zu und nahe einer oder angrenzend an eine Befestigungsebene (20) des Anhängebockes (10) angeordnet ist, die durch die fahrzeugseitigen Ränder der Seitenwangen (12) verläuft.

2. Anhängesystem nach Anspruch 1, **dadurch gekennzeichnet, dass** zumindest im Bereich der Brücke (22) die senkrecht zu der Befestigungsebene (20) gemessene Abmessung der Seitenwangen (12) so gewählt ist, dass der Abstand der fahrzeugfernen Ränder der Seitenwangen (12) von der Platte geringer als der Abstand des Kupplungsgliedes (40; 46) der Verbindungseinrichtung von der Platte (22) ist.

3. Anhängesystem nach Anspruch 1 oder 2, **dadurch gekennzeichnet, dass** die Brücke (22) lösbar mit den Seitenwangen (12) verbunden ist.

4. Anhängesystem nach Anspruch 3, **dadurch gekennzeichnet, dass** die die Brücke (22) bildende Platte in Nuten (37) eingreift, die an den einander zugekehrten Innenflächen der Seitenwangen (12) ausgebildet sind.

5. Anhängesystem nach Anspruch 3 oder 4, **dadurch gekennzeichnet, dass** die Brücke (22) über Steckbolzen (38) an den Seitenwangen (12) arretierbar ist, die Bohrungen in den Seitenwangen (12) durchsetzen.

6. Anhängesystem nach einem der Ansprüche 1 bis 5, **dadurch gekennzeichnet, dass** die Nuten (37) an mindestens einem Längsende der Seitenwangen (12) offen sind und dass die Verbindungseinrichtung als Bolzenkupplung (26) (Anhängekupplung) ausgebildet ist.

7. Anhängesystem nach einem der Ansprüche 1 bis 5, **dadurch gekennzeichnet, dass** die die Brücke (22) bildende Platte mit einem senkrecht zu ihr gerichteten Trägerabschnitt (44) für die Verbindungseinrichtung verbunden ist.

8. Anhängesystem nach Anspruch 7, **dadurch gekennzeichnet, dass** die Verbindungseinrichtung als Hitch-Haken-Kupplung mit einem auf dem Trägerabschnitt (44) angeordneten Hitch-Haken ausgebildet ist.

9. Anhängesystem nach Anspruch 7, **dadurch gekennzeichnet, dass** die Verbindungseinrichtung als Kugelkopfkupplung (42) mit einer auf dem Trägerabschnitt (44) angeordneten Kupplungskugel (46) ausgebildet ist.

10. Anhängesystem nach Anspruch 7, **dadurch gekennzeichnet, dass** die Verbindungseinrichtung als Piton-Fix-Kupplung mit einem auf dem Trägerabschnitt (44) angeordneten Kupplungszapfen ausgebildet ist.

11. Anhängekupplung nach einem der Ansprüche 7 bis 10, **dadurch gekennzeichnet, dass** die die Brücke (22) bildende Platte einstückig mit dem Trägerabschnitt (44) ausgebildet ist.

12. Anhängesystem nach einem der Ansprüche 1 bis 11, **dadurch gekennzeichnet, dass** zwischen den oberen Endabschnitten der Seitenwangen (12) eine weitere Brücke (24) angeordnet ist, die eine weitere Verbindungseinrichtung (26) trägt.

13. Anhängesystem nach Anspruch 12, **dadurch gekennzeichnet, dass** die weitere Verbindungseinrichtung eine Bolzenkupplung (26) ist.

14. Anhängesystem nach Anspruch 12 oder 13, **dadurch gekennzeichnet, dass** die Brücken (24) als Fahrstuhllager ausgebildet sind.

15. Anhängesystem nach Anspruch 1, **dadurch gekennzeichnet, dass** die Verbindungseinrichtung als manuelle Bolzenkupplung ausgebildet ist mit einem blockförmigen äußeren Kupplungsteil (62), das um eine zur plattenförmigen Brücke (22) senkrechte erste Schwenkachse (68) schwenkbar gelagert ist, und mit einem inneren Kupplungsteil (86), das in einer der Außenkontur des inneren Kupplungsteiles (86) angepassten Aufnahme (84) des äußeren Kupplungsteiles (62) um eine zur ersten Schwenkachse (86) senkrechte zweite Schwenkachse (92) schwenkbar gelagert ist und eine senkrecht zur zweiten Schwenkachse (92) gerichtete Bohrung (94) zur Führung eines Kupplungsbolzens (98) hat, dessen Länge so gewählt ist, dass die axialen Endflächen des Kupplungsbolzens (98) im Wesentlichen mit der Außenfläche des inneren Kupplungsteiles (86) fluchten.

16. Anhängesystem nach Anspruch 15, **dadurch gekennzeichnet, dass** sich die beiden Schwenkachsen (68, 92) und die Bolzenachse (96) in einem Punkt schneiden.

17. Anhängesystem nach Anspruch 15 oder 16, **dadurch gekennzeichnet, dass** das innere Kupplungsteil (86) in dem äußeren Kupplungsteil (62) zwischen zwei Endlagern verschwenkbar und in einer Mittelstellung zwischen den beiden Endlagern vorgespannt ist, in der die Bolzenachse (96) senkrecht zur ersten Schwenkachse (68) gerichtet ist.

18. Anhängesystem nach einem der Ansprüche 6, 15, 16 und 17, **dadurch gekennzeichnet, dass** das äußere Kupplungsteil (62) mit einem Lagerzapfen (64) in einer in der Brücke angeordneten Lageranordnung gelagert ist, die mindestens ein Schräggelenklager (66) umfasst mit einem brückenfesten Außenring (72) und einem auf dem Lagerzapfen (64) sitzenden Innenring (74), wobei die aneinander anliegenden Gleitflächen (76, 78) von Außenring (72) und Innenring (74) sphärische Ringflächen sind.
